# EUROPEAN PATENT APPLICATION

(11) **EP 4 306 268 A2**
(43) Date of publication of application: **17.01.2024**
(21) Application number: 23184257.6
(22) Date of filing: 07.07.2023
(51) Int. Cl.: B25J 5/00, B25J 9/00

(54) **LOGISTICS ROBOTIC SYSTEM**

(30) Priority: 12.07.2022 US 202217811948
(71) Applicant: Intelligrated Headquarters LLC, Mason, OH 45040 (US)
(72) Inventor: REST, Adam Ming, Charlotte, 28202 (US)
(74) Representative: Haseltine Lake Kempner LLP

(57) **Abstract**

Various embodiments illustrated herein disclose a robotic system. The robotic system includes a moveable base, a conveyor system disposed on the movable base, a vertical mount coupled to the movable base by one or more vertical actuation devices, and a plurality of robotic manipulators, each having a first end mounted to the vertical mount and a second end having an end effector. The plurality of robotic manipulators are mounted above the conveyor system and operate in a vertical place to individually load items to or unload items from a logistics container.

## Description

### BACKGROUND

The present disclosure relates in general to a robotic system for handling cargo, and is more particularly directed to robotic loading and unloading systems for automatically loading or unloading logistic containers. Logistic containers loaded with cargo are moved around the world to deliver products to loading and unloading warehouses. Manually loading and unloading items from and/or to logistic containers is arduous, repetitive. and injury-prone making these jobs notoriously difficult to fill with high turnover rates. Automated robotic alternatives have been used to help loading and unloading logistic containers. However, these alternatives are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to methods, apparatuses, and systems comprising logistic robotic systems.

In accordance with various examples of the present disclosure, a robotic system comprises a moveable base; a conveyor system disposed on the movable base; a vertical mount coupled to the movable base by one or more vertical actuation devices; and a plurality of robotic manipulators, each having a first end mounted to the vertical mount and a second end having an end effector.

In some embodiments, the conveyor system comprises a conveyor surface. The vertical mount is disposed a threshold distance above the conveyor surface.

In some embodiments, a robotic manipulator of the plurality of robotic manipulators comprises a six degrees of freedom robotic arm configured to move in a vertical plane.

In some embodiments, the robotic manipulator is configured to transfer an item from a container to a corresponding section of the conveyor surface located below the robotic manipulator.

In some embodiments, the vertical mount is movable between a plurality of vertical positions. Each respective vertical position is a respective distance from the moveable base.

In some embodiments, the conveyor system is movable in a vertical direction such that the vertical mount is disposed the threshold distance above the conveyor surface at each of the plurality of vertical positions.

In some embodiments, a vertical position for the vertical mount is based on a container height of a container or an item height of one or more items disposed within the container.

In some embodiments, the one or more vertical actuation devices are operable to adjust the vertical position of the vertical mount responsive to: (i) a movement of the one or more items within the container or (ii) an item layout within the container.

In some embodiments, the vertical position is medial to the height of the container.

In some embodiments, the end effector comprises a vacuum effector.

In some embodiments, the conveyor system comprises one or more orientation mechanisms operable to adjust a position of an item placed on a conveyor surface of the conveyor system.

In some embodiments, the one or more orientation mechanisms comprise one or more side actuators configured to apply a force to the item placed on the conveyor surface to position the item in a center section of the conveyor surface.

In some embodiments, the robotic system further comprises a conveyor vision system. The conveyor vision system comprises at least one conveyor camera operable to generate conveyor data indicative of an arrangement of a plurality of items disposed on a conveyor surface of the conveyor system.

In some embodiments, the at least one conveyor camera is disposed at a fixed position relative to the conveyor system.

In some embodiments, the robotic system further comprises a controller communicatively coupled to the conveyor system and configured to automatically control the conveyor system based on the conveyor data. The conveyor system is controlled to arrange the plurality of items in a singulated flow.

In some embodiments, the robotic system further comprises a robotic manipulator vision system. The robotic manipulator vision system comprises a plurality of manipulator cameras operable to generate container data indicative of an interior of a container. The robotic manipulator vision system is distinct from the conveyor vision system.

In some embodiments, a number and a placement of the plurality of manipulator cameras is based on a number of the plurality of robotic manipulators.

In some embodiments, the robotic system further comprises a controller communicatively coupled to the plurality of robotic manipulators and configured to automatically control the plurality of manipulators based on the container data.

In accordance with various examples of the present disclosure, a method is provided. The method comprises receiving container data indicative of an interior of a container; generating, based on the container data, vertical orientation instructions for positioning a plurality of robotic manipulators relative to the container; initiating, based on the vertical orientation instructions, a vertical movement of the plurality of robotic manipulators; and controlling at least one of the plurality of robotic manipulators to move an item disposed within the container.

In some embodiments, the method further comprises receiving conveyor data indicative of an arrangement of a plurality of items disposed on a conveyor surface of a conveyor system; generating, based on the conveyor data, arrangement instructions to arrange the plurality of items in a singulated flow on the conveyor surface; and controlling, based on the arrangement instructions, at least one section of the conveyor system to move an item disposed on a conveyor surface. The plurality of robotic manipulators and the conveyor system are disposed on a shared moveable base.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments can be read in conjunction with the accompanying figures. It will be appreciated that, for simplicity and clarity of illustration, elements illustrated in the figures have not necessarily been drawn to scale, unless described otherwise. For example, the dimensions of some of the elements can be exaggerated relative to other elements, unless described otherwise. At times, like reference numeral are used across multiple figures. These like reference numerals refer to like parts throughout the multiple figures unless otherwise specified. Embodiments incorporating teachings of the present disclosure are shown and described with respect to the figures presented herein, in which:
FIG. 1 illustrates an example of a system in accordance with various embodiments of the present disclosure;
FIG. 2 illustrates an exemplary side perspective view of a robotic unloader in accordance with various embodiments of the present disclosure;
FIG. 3 illustrates an exemplary top perspective view of a robotic unloader in accordance with various embodiments of the present disclosure;
FIG. 4 illustrates an exemplary front perspective view of a robotic unloader in a logistics container in accordance with various embodiments of the present disclosure;
FIG. 5 illustrates an exemplary back perspective view of a robotic unloader and logistics container in accordance with various embodiments of the present disclosure;
FIG. 6 illustrates an example controller component in electronic communication with various other components of an example robotic system in accordance with various embodiments of the present disclosure;
FIG. 7 is a flowchart diagram illustrating example operations in accordance with various embodiments of the present disclosure; and
FIG. 8 is a flowchart diagram illustrating example operations in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures can be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that can or cannot be present in various embodiments of the present disclosure described herein such that embodiments can include fewer or more components than those shown in the figures while not departing from the scope of the present disclosure. Some components can be omitted from one or more figures or shown in dashed line for visibility of the underlying components.

The phrases "in an example embodiment," "some embodiments," "various embodiments," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other embodiments.

If the specification states a component or feature "can," "could," "should," "would," "preferably," "possibly," "typically," "optionally," "for example," "often," or "might" (or other such language) be included or have a characteristic, that a specific component or feature is not required to be included or to have the characteristic. Such components or features can be optionally included in some embodiments, or can be excluded.

The term "electronically coupled" or "in electronic communication with" in the present disclosure can refer to two or more electrical elements (for example, but not limited to, an example processing circuitry, communication element, input/output module memory) and/or electric circuit(s) being connected through wired means (for example but not limited to, conductive wires, system bus, wired Ethernet connection or traces) and/or wireless means (for example but not limited to, wireless network, electromagnetic field, Wi-Fi, Bluetooth, Zigbee), such that data and/or information (for example, electronic indications, signals) can be transmitted to and/or received from the electrical elements and/or electric circuit(s) that are electronically coupled.

Automated robotic loaders and/or unloaders can be utilized in a logistic workflow to load and/or unload items to and/or from a logistics container. A logistics container, for example, can include a tractor container, a seabound container, or any other shipping container that can hold a plurality of items for transport and/or storage. Current automated robot systems offer several disadvantages in terms of adaptability and throughput and can use manual labor which can result in inefficiencies and inaccuracies in the logistic workflow. For example, automated robot systems can be designed for handling (e.g., loading/unloading, etc.) structured items (e.g., a plurality of items arranged in a particular manner), which reduces the system's flexibility in unstructured scenarios such as, for example, when one or more items are separated from an item wall or stack. Moreover, the performance of these systems can degrade depending on the size, dimensions, and arrangements of the items to be handled. In some cases, items can be moved during transit resulting in an unstructured arrangement of items, with potentially different dimensions, that cannot be effectively handled by current automated robot systems. This leads to decreased throughput, adaptability, and control over item handling in a logistics workflow and can increase inefficiencies, and inaccuracies for logistic container processing. A robotic system that is capable of handling individual items of various dimensions and arranged in unstructured formats is therefore advantageous.

In accordance with various embodiments of the present disclosure, example methods, apparatuses, computer program products and systems are provided that, in some examples provide a robotic system for handling items within a logistics container. The robotic system can include a plurality of vertically mounted robotic manipulators that can work independent of one another to handle individual items in various structured or unstructured arrangements.

For example, the present disclosure provides a robotic system including a moveable base, a conveyor system disposed on the moveable base, a vertical mount coupled to the moveable base, and a plurality of robotic manipulators. The vertical mount is coupled to the movable base by one or more vertical actuation devices operable to move the vertical mount between one or more vertical positions, each a respective distance above the movable base. The plurality of robotic manipulators are mounted to the vertical mount. For example, each robotic manipulator has a first end mounted to the vertical mount and a second end having an end effector. The end effector is operable to form a connection (e.g., by suction, gripping, etc.) with one item or multiple items within a logistics facility (e.g., in a logistics container, etc.).

As such, the present disclosure provides a robotic system having multiple robotic manipulators in a top mounted orientation with respect to a movable base. The movable base can advance the manipulators into a logistics container to handle items therein. A conveyor system disposed on the movable base can include rollers and/or actuators for orienting and/or positioning items handled by the robotic manipulators to a singulated outflow. In this manner, the robotic system can efficiently divide functions such as item handling and/or item singulation between different components of the robot system to increase the flexibility of motion for the multiple robotic manipulators.

Moreover, by vertically mounting the robotic manipulators, the robotic system can accommodate robotic manipulators of reduced sizes, which can further increase each robotic manipulator's range of motion and allow the robotic manipulators to independently handle items. In this manner, the robotic manipulators can be configured to handle unstructured loads by independently handling one item (or group of items) at a time. Furthermore, the robotic manipulators can be mounted to a movable vertical mount such that the robotic manipulators can be positioned relative to the logistics container and/or the items therein. In this manner, the robotic manipulators can be positioned to shorten a path between an item and the conveyor system to further reduce cycle time and increase throughput.

In this manner, the robotic system described herein provides a practical improvement over conventional logistic robotic systems that leads to increased throughput, adaptability, and control over item handling in a logistics workflow and decreases inefficiencies, and inaccuracies for logistic container processing.

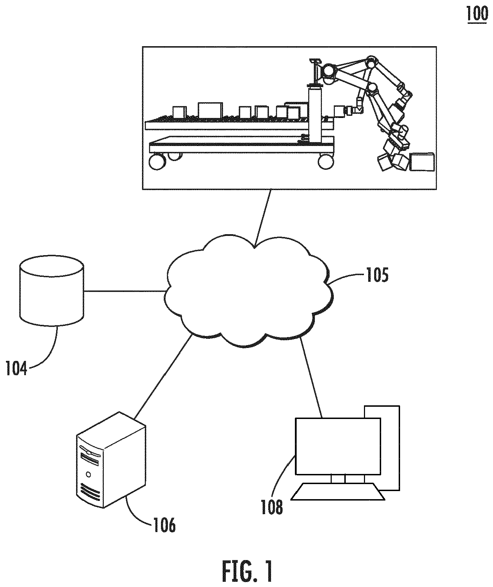

FIG. 1, a schematic diagram depicting an example system 100 in accordance various embodiments of the present disclosure is provided. As depicted, the example system 100 includes a robotic system 102, one or more computing entities 106 (e.g., servers), one or more databases 104, one or more networks 105, one or more user computing entities 108, and/or the like. In various examples, the system 100 can operate to handle items at a logistic facility. For example, as described herein, the robotic system 102 can be configured to handle objects within a particular location or environment utilizing one or more robotic manipulators, conveyor systems, and/or other robotic components of the robotic system 102.

The robotic system 102, the one or more computing entities 106, the one or more databases 104 and/or the one or more user computing entities 108 can be in electronic communication with each other over the one or more networks 105 such that they can exchange data (e.g., receive and transmit data) with one another (e.g., periodically and/or in response to requests). Each of the components of the system 100 can be in communication with one another over the same or different wireless or wired networks 105 including, for example, a wired or wireless Personal Area Network (PAN), Local Area Network (LAN), Metropolitan Area Network (MAN), Wide Area Network (WAN), cellular network, and/or the like. While FIG. 1 illustrates certain system components as separate, standalone devices, the various embodiments are not limited to this particular architecture.

As depicted in FIG. 1, the example system 100 includes one or more computing entities 106. In general, the terms computing device, entity, device, system, and/or similar words used herein interchangeably can refer to, for example, one or more computers, computing devices, computing entities, desktop computers, mobile phones, tablets, phablets, notebooks, laptops, distributed systems, terminals, servers or server networks, blades, gateways, switches, processing devices, set-top boxes, relays, routers, network access points, base stations, the like, and/or any combination of devices adapted to perform the functions, operations, and/or processes described herein. Such functions, operations, and/or processes can include, for example, transmitting, receiving, operating on, processing, displaying, storing, determining, generating/creating, monitoring, evaluating, comparing, and/or similar terms used herein interchangeably. In one embodiment, these functions, operations, and/or processes can be performed on data, content, information, and/or similar terms used herein interchangeably.

In some examples, the computing entity 106 can also include one or more network and/or communications interfaces for communicating with various computing entities, such as by communicating data, content, information, and/or similar terms used herein interchangeably that can be transmitted, received, operated on, processed, displayed, stored, and/or the like.

In one embodiment, the computing entity 106 can further include or be in communication with non-volatile media (also referred to as non-volatile storage, memory, memory storage, memory circuitry and/or similar terms used herein interchangeably). In one embodiment, the non-volatile storage or memory can include one or more non-volatile storage or memory media as described above, such as hard disks, ROM, PROM, EPROM, EEPROM, flash memory, MMCs, SD memory cards, Memory Sticks, CBRAM, PRAM, FeRAM, RRAM, SONOS, racetrack memory, and/or the like. As will be recognized, the non-volatile storage or memory media can store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably can refer to a structured collection of records or information/data that is stored in a computer-readable storage medium, such as via a relational database, hierarchical database, and/or network database.

In one embodiment, the computing entity 106 can further include or be in communication with volatile media (also referred to as volatile storage, memory, memory storage, memory circuitry and/or similar terms used herein interchangeably). In one embodiment, the volatile storage or memory can also include one or more volatile storage or memory media as described above, such as RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. As will be recognized, the volatile storage or memory media can be used to store at least portions of the databases, database instances, database management system entities, data, applications, programs, program modules, scripts, source code, object code, byte code, compiled code, interpreted code, machine code, executable instructions, and/or the like being executed by, for example, the processing element. Thus, the databases, database instances, database management system entities, data, applications, programs, program modules, scripts, source code, object code, byte code, compiled code, interpreted code, machine code, executable instructions, and/or the like can be used to control certain aspects of the operation of the computing entity 106 with the assistance of the processing element and the operating system.

As indicated, in one embodiment, the computing entity 106 can also include one or more network and/or communications interfaces for communicating with various computing entities, such as by communicating data, content, information, and/or similar terms used herein interchangeably that can be transmitted, received, operated on, processed, displayed, stored, and/or the like. Such communication can be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, computing entity 106 can be configured to communicate via wireless external communication networks using any of a variety of protocols, such as embedded sim (eSIM), remote sim provisioning (RSP), general packet radio service (GPRS), Universal Mobile Telecommunications System (UMTS), Code Division Multiple Access 200 (CDMA200), CDMA200 1X (lxRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), HighSpeed Downlink Packet Access (HSDPA), IEEE 802.11 (Wi-Fi), Wi-Fi Direct, 802.16 (WiMAX), ultra-wideband (UWB), IR protocols, NFC protocols, RFID protocols, IR protocols, ZigBee protocols, Z-Wave protocols, 6LoWPAN protocols, Wibree, Bluetooth protocols, wireless universal serial bus (USB) protocols, and/or any other wireless protocol. The computing entity 106 can use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

As will be appreciated, one or more of the computing entity's 106 components can be located remotely from other computing entity 106 components, such as in a distributed system. Furthermore, one or more of the components can be aggregated and additional components performing functions described herein can be included in the computing entity 106. Thus, the computing entity 106 can be adapted to accommodate a variety of needs and circumstances, such as including various components described with regard to a mobile application executing on the user computing entity 108, including various input/output interfaces.

As depicted in FIG. 1, the system 100 includes a user computing entity 108. In various embodiments, the user computing entity 108 can be or include one or more mobile devices, wearable computing devices, and/or the like. An example user computing entity 108 can include an antenna, a transmitter (e.g., radio), a receiver (e.g., radio), and a processing element that provides signals to and receives signals from the transmitter and receiver, respectively. The signals provided to and received from the transmitter and the receiver, respectively, can include signaling information/data in accordance with an air interface standard of applicable wireless systems to communicate with various devices, such as a computing entity (e.g., central server), another user computing entity 108, and/or the like. In an example embodiment, the transmitter and/or receiver are configured to communicate via one or more SRC protocols. For example, the transmitter and/or receiver can be configured to transmit and/or receive information/data, transmissions, and/or the like of at least one of Bluetooth protocols, low energy Bluetooth protocols, NFC protocols, RFID protocols, IR protocols, Wi-Fi protocols, ZigBee protocols, Z-Wave protocols, 6LoWPAN protocols, and/or other short range communication protocol. In various embodiments, the antenna, transmitter, and receiver can be configured to communicate via one or more long range protocols, such as GPRS, UMTS, CDMA200, 1xRTT, WCDMA, GSM, EDGE, TD-SCDMA, LTE, E-UTRAN, EVDO, HSPA, HSDPA, Wi-Fi, Wi-Fi Direct, WiMAX, and/or the like. The user computing entity 108 can also include one or more network and/or communications interfaces for communicating with various computing entities, such as by communicating data, content, information, and/or similar terms used herein interchangeably that can be transmitted, received, operated on, processed, displayed, stored, and/or the like. In this regard, the user computing entity 108 can be capable of operating with one or more air interface standards, communication protocols, modulation types, and access types. More particularly, the user computing entity 108 can operate in accordance with any of a number of wireless communication standards and protocols. In a particular embodiment, the user computing entity 108 can operate in accordance with multiple wireless communication standards and protocols, such as GPRS, UMTS, CDMA200, 1xRTT, WCDMA, TD-SCDMA, LTE, E-UTRAN, EVDO, HSPA, HSDPA, Wi-Fi, WiMAX, UWB, IR protocols, Bluetooth protocols, USB protocols, and/or any other wireless protocol.

Via these communication standards and protocols, the user computing entity 108 can communicate with various other devices using concepts such as Unstructured Supplementary Service information/data (USSD), Short Message Service (SMS), Multimedia Messaging Service (MMS), Dual-Tone Multi-Frequency Signaling (DTMF), and/or Subscriber Identity Module Dialer (SIM dialer). The user computing entity 108 can also download changes, add-ons, and updates, for instance, to its firmware, software (e.g., including executable instructions, applications, program modules), and operating system.

According to one embodiment, the user computing entity 108 can include location determining aspects, devices, modules, functionalities, and/or similar words used herein interchangeably to acquire location information/data regularly, continuously, or in response to certain triggers.

The user computing entity 108 can include a user interface device comprising one or more user input/output interfaces (e.g., a display and/or speaker/speaker driver coupled to a processing element and a touch interface, keyboard, mouse, and/or microphone coupled to a processing element). For example, the user interface can be configured to provide a mobile application, browser, interactive user interface, dashboard, webpage, and/or similar words used herein interchangeably executing on and/or accessible via the user computing entity 108 to cause display or audible presentation of information/data and for user interaction therewith via one or more user input interfaces. Moreover, the user interface can include or be in communication with any of a number of devices allowing the user computing entity 108 to receive information/data, such as a keypad (hard or soft), a touch display, voice/speech or motion interfaces, scanners, readers, or other input device. In embodiments including a keypad, the keypad can include (or cause display of) the conventional numeric (0-9) and related keys (#, *), and other keys used for operating the user computing entity 108 and can include a full set of alphabetic keys or set of keys that can be activated to provide a full set of alphanumeric keys. In addition to providing input, the user input interface can be used, for example, to activate or deactivate certain functions, such as screen savers and/or sleep modes. Through such inputs the user computing entity 108 can capture, collect, store information/data, user interaction/input, and/or the like.

The user computing entity 108 can also include volatile storage or memory and/or non-volatile storage or memory, which can be embedded and/or can be removable. For example, the non-volatile memory can be ROM, PROM, EPROM, EEPROM, flash memory, MMCs, SD memory cards, Memory Sticks, CBRAM, PRAM, FeRAM, RRAM, SONOS, racetrack memory, and/or the like. The volatile memory can be RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. The volatile and non-volatile storage or memory can store databases, database instances, database management system entities, information/data, applications, programs, program modules, scripts, source code, object code, byte code, compiled code, interpreted code, machine code, executable instructions, and/or the like to implement the functions of the user computing entity 108.

As depicted in FIG. 1, any two or more of the illustrative components of the system 100 of FIG. 1 can be configured to communicate with one another via one or more networks 105. The networks 105 can include, but are not limited to, any one or a combination of different types of suitable communications networks such as, for example, cable networks, public networks (e.g., the Internet), private networks (e.g., frame-relay networks), wireless networks, cellular networks, telephone networks (e.g., a public switched telephone network), or any other suitable private and/or public networks. Further, the networks 105 can have any suitable communication range associated therewith and can include, for example, global networks (e.g., the Internet), MANs, WANs, LANs, or PANs. In addition, the networks 105 can include any type of medium over which network traffic can be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof, as well as a variety of network devices and computing platforms provided by network providers or other entities.

While FIG. 1 provides an example system 100, it is noted that the scope of the present disclosure is not limited to the example shown in FIG. 1. In some examples, the system 100 can include one or more additional and/or alternative elements, and/or can be different from that illustrated in FIG. 1.

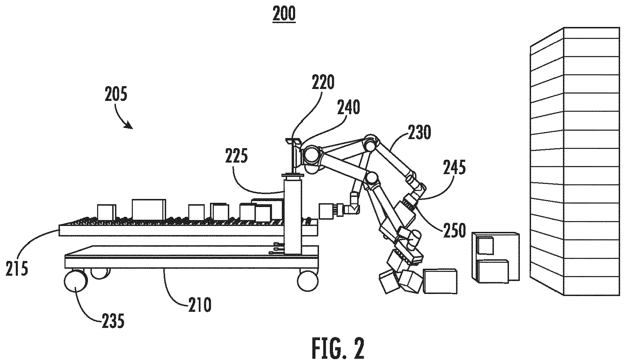

FIG. 2 illustrates an exemplary side perspective view 200 of a robotic system 205 in accordance with various embodiments of the present disclosure. The robotic system 205 can include a movable base 210, a conveyor system 215 disposed on the movable base 210, a vertical mount 220 coupled to the movable base 210, and a plurality of robotic manipulators 230.

The movable base 210 can include a plurality of wheels (e.g., such as wheel 235), a continuous track, mechanical legs, and/or any other mechanism for moving the movable base 210 across a level and/or uneven surface. As one example, the movable base 210 can include a plurality of wheels 235 coupled thereto. The plurality of wheels 235 can be controllable to move the movable base 210 across a surface. In some embodiments, the plurality of wheels can be controllable to move the movable base 210 relative to a logistics container. By way of example, the plurality of wheels can be controllable to move at least a portion of the movable base 210 within the logistics container.

The movable base 210 can be configured in one or more different dimensions. In some embodiments, the movable base 210 can include a threshold width that is at least partially smaller than a width of the logistics container. In this manner, the robotic system 205 can be moved within the logistics container without interference.

The vertical mount 220 can be coupled to the movable base 210 by one or more vertical actuation devices 225. The vertical actuation devices 225 can include one or more electrical and/or mechanical actuation devices operable to linearly move the vertical mount 220 in a direction perpendicular to the surface of the movable base 210. As described herein, the one or more vertical actuation devices 225 can be operable to adjust a position of the vertical mount 220 between a plurality of vertical positions, each a respective distance above the movable base 210.

The plurality of robotic manipulators 230 can include at least two robotic manipulators 230. The number of robotic manipulators 230 can be reconfigurable. For instance, the number of robotic manipulators 230 can be based on a logistics container size, an orientation of items with the logistics container, and/or any other factor that can impact the throughput achievable by the robotic system 205. In some embodiments, the robotic system 205 can include four robotic manipulators 230, however, any number of robotic manipulators 230 is within the scope of the present disclosure.

Each of the plurality of robotic manipulators 230 can have a first end 240 and a second end 245 that is opposite to the first end 240. The robotic manipulators 230 can be mounted to the vertical mount 220 at the first end 240 and the second end 245 can include an end effector 250.

A robotic manipulator 230 can include a robotic arm. The robotic arm can include any robotic arm design such as, for example, a cartesian robotic arm, a cylindrical robotic arm, polar/spherical robotic arm, pneumatic robotic arm, and/or the like. As one example, the robotic manipulator 230 can include a six degrees of freedom robotic arm. In addition, or alternatively, the robotic manipulator 230 can include a cartesian robotic arm and/or pneumatic robotic arm. In some embodiments, the robotic manipulator 230 can be removably mounted to the vertical mount 220 and can be reconfigured based on one or more load characteristics (e.g., item dimensions, arrangements, fragility, etc.) associated with a loading and/or unloading activity.

The end effector 250 can include any gripping mechanism operable to grasp, draw, drag, and/or otherwise move an item. As one example, the end effector 250 can include one or more vacuum effectors. In addition, or alternatively, the end effector 250 can include mechanical grippers, pneumatic grippers, and/or any other robotic gripping mechanism. In some embodiments, the end effector 250 can be removably coupled to the arm of the robotic manipulator 230 and can be reconfigured based on one or more load characteristics associated with a loading and/or unloading activity.

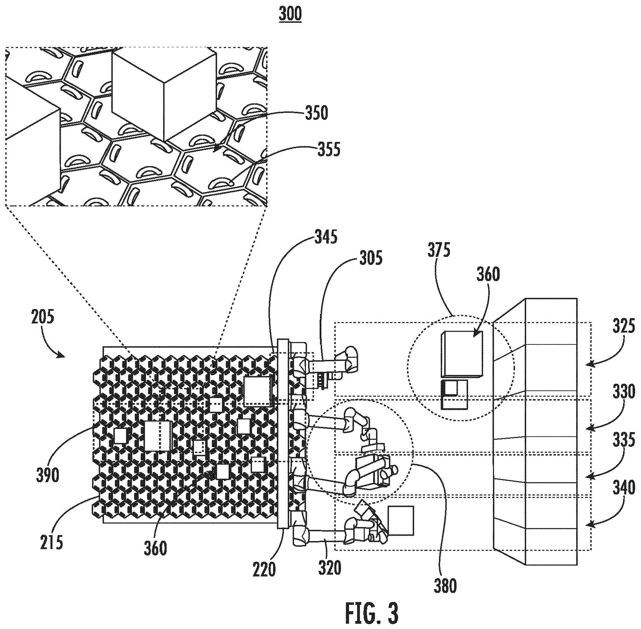

FIG. 3 illustrates an exemplary top perspective view 300 of the robotic system 205 in accordance with various embodiments of the present disclosure. As described herein, the robotic system 205 can include a conveyor system 215 and a plurality of robotic manipulators. The robotic system 205 can be configured to move items 360 from one location (e.g., a logistics container, pallet, etc.) to another location in a controlled manner. To efficiently process the items 360, the robotic system 205 can arrange the items 360 in a singular line. This singulation of the outflow (or inflow in a loading activity) of items 360 can improve item tracking and inventory management.

In some embodiments, the robotic system 205 can divide the functions of: (i) loading/unloading an item, and (ii) the singulation of the outflow of items between one or more different components of the robotic system 205. By way of example, the robotic manipulators can be configured to load and/or unload the items 360. The conveyor system 215 can be configured to cause the singulation of the outflow of the items 360. As described herein, dividing the functions of the robotic system 205 can improve the flexibility of motion for the robotic manipulators.

For example, the robotic system 205 can include a first robotic manipulator 305, a second robotic manipulator 310, a third robotic manipulator 315, and/or a fourth robotic manipulator 320. The robotic manipulators can be mounted horizontally (with respect to one another) across the vertical mount 220. The vertical mount 220 can be disposed above the conveyor system 215 by a threshold distance such that at least a portion of each of the robotic manipulators are located above conveyor system 215 by the threshold distance. For example, the vertical mount 220 can be disposed more than ninety degrees from the floor normal allowing the robotic manipulators to operate in a vertical motion.

The robotic manipulators can be configured to move in a vertical plane. For instance, each robotic manipulator can be mounted in position on the vertical mount 220 to load and/or unload items in a respective portion of an environment. Each robotic manipulator, for example, can be configured to operate in a vertical slice of an environment (e.g., shipping container, loading facility, etc.) in front of the respective robotic manipulator. An environment in front of the robotic system 205, for example, can be divided into one or more handling zones and respectively assigned to each robotic manipulator. The items 360 within the environments can be divided into at least one of the handling zones for pick-up/drop-off by a robotic manipulator corresponding to the at least one handling zone.

By way of example, the first robotic manipulator 305 can be configured to operate in a first handling zone 325, the second robotic manipulator 310 can be configured to operate in a second handling zone 330, the third robotic manipulator 315 can be configured to operate in a third handling zone 335, and/or the fourth robotic manipulator 320 can be configured to operate in a fourth handling zone 340. Four robotic manipulators and four handling zones are illustrated by FIG. 3 for exemplary purposes only. The robotic system 205 can include any number of robotic manipulators and is not limited to the number illustrated by FIG. 3. Moreover, the environment can be divided into any number of handling zones and is not limited the number illustrated by FIG. 3. For instance, in some embodiments, one or more robotic manipulators can share one handling zone, or one robotic manipulator can be assigned to multiple handling zones.

Each robotic manipulator can independently handle items within a respective handling zone (or zones). For instance, a robotic manipulator can independently move a single item or multiple items. Each of the robotic manipulators can be configured to independently operate to simultaneously handle a plurality of items 360 in each of the handling zones.

By separating the robotic manipulators, the robotic system 205 can allow each robotic manipulator to independently approach a particular item (and/or items). This can allow a robotic manipulator to make specific adjustments for a particular item, thereby enabling more control over the loading and/or unloading of a logistics container. In this manner, the robotic system 205 described herein can allow for unloading of unstructured items 375 within a logistics container and enable the loading of different loading arrangements and/or partial fills of the logistics container.

In some embodiments, the increased flexibility of the robotic manipulators can allow two or more of the plurality of robotic manipulators to coordinate their movements for collaboratively handling items. By way of example, FIG. 3 illustrates one example collaboration scenario 380 in which the second robotic manipulator 310 and the third robotic manipulator 315 can collaboratively move an item within the third handling zone 335. The robotic manipulators can collaborate to move one or more items within each of the handling zones to accommodate different item dimensions, sizes, weights, etc. In some embodiments, the end effectors for each of the plurality of robotic manipulators can be configured to increase collaboration efficiency. In this manner, two, three, or more of the plurality of robotic manipulators can collaboratively move one or more items within and/or between the plurality of handling zones.

The robotic system 205 can include one or more vision systems (not shown) configured to capture sensor data indicative of the robotic system's environment. As described herein, the vision systems can include a robotic manipulator vision system. The robotic manipulator vision system can include one or more sensors (e.g., depth, color (e.g., RGB), and other spectrum sensors) for recording sensor data indicative of respective area proximate to the robotic system. By way of example, the sensor data can include container data representative of a current (or past) state for each of the handling zones. The container data can be utilized by the robotic system 205 to identify items within a handling zone and/or automatically actuate the plurality of robotic manipulators for handling items within each of the robotic manipulator's respective handling zone.

The robotic manipulators can individually (or collaboratively) move the items 360 from a handling zone (e.g., within a logistic container, etc.) to the conveyor system 215 of the robotic system 205. In some embodiments, a robotic manipulator can place respective items on the conveyor system 215 in a position directly (and/or indirectly) underneath the robotic manipulator such that each robotic manipulator can simultaneously operate to move an item without interfering with adjacent robotic manipulators. For example, the first robotic manipulator 305 can be configured to transfer a respective item from the first handling zone 325 (e.g., within the logistic container, etc.) to a corresponding section 345 of the conveyor surface located below the first robotic manipulator 305. In this manner, the first robotic manipulator 305 can independently handle a plurality of items without interfering with adjacent robotic manipulators (e.g., second robotic manipulator 310).

The conveyor system 215 can be configured to move the items 360 from an inflow position to an outflow position. The inflow position, for example, can include a front position of the robotic system 205, such as section 345, in which an item is placed on the conveyor system 215 by a robotic manipulator, such as the first robotic manipulator 305. The outflow position can include a back position of the robotic system 205 in which an item is unloaded from the conveyor system 215 and/or otherwise processed by a logistic processing facility.

The following description of the conveyor system refers to the inflow position as the position at which the item is placed on the conveyor system 215 by a robotic manipulator and the outflow position as the position at which the item is unloaded from the conveyor system 215. However, it noted that an inverse configuration for loading a logistic container is within the scope of the present disclosure. For example, the inflow position can include the back position of the robotic system 205 in which an item is placed on the conveyor system 215 from the logistic processing facility and the outflow position can include a front position of the robotic system 205 in which the item is placed in a handling area by a robotic manipulator.

The conveyor system 215 can include one or more orientation mechanisms operable to adjust a position of an item placed on a conveyor surface of the conveyor system 215. The one or more orientation mechanisms can include one or more actuators, rollers, and/or any other mechanism for moving and/or otherwise reorienting an item on a conveyor surface. As one example, the one or more orientation mechanisms can include one or more side actuators (e.g., show sliders, etc.) configured to apply a force to an item placed on the conveyor surface to position the item in a center section 390 of the conveyor surface. As another example, the conveyor system 215 can include a plurality of individual self-driven rollers operable to collaboratively reposition the item. For instance, as illustrated by FIG. 3 for exemplary purposes, the orientation mechanisms can include a plurality of cells 350, each including individual self-driven rollers 355. The cells 350 can collaborate to move items to the center section 390 of the conveyor surface. In this manner, the conveyor system 215 can provide for a singulation of the outflow of the items 360.

The singulated flow can advantageously improve logistic processing functions such as, for example, the scanning, tracking, and inventory management for the items 360. For instance, reducing the infeed of items to a singular line can improve the efficiency of logistic mechanisms such as scanners and/or the like. The logistic mechanisms, for example, can include item scanners (e.g., barcode scanner, CCD scanners, etc.). In some embodiments, the robotic system 205 can include item scanners. By way of example, the item scanners can be disposed relative to the conveyor system 215 to enable the robotic system 205 to scan items while loading and/or unloading the items to/from a logistic container.

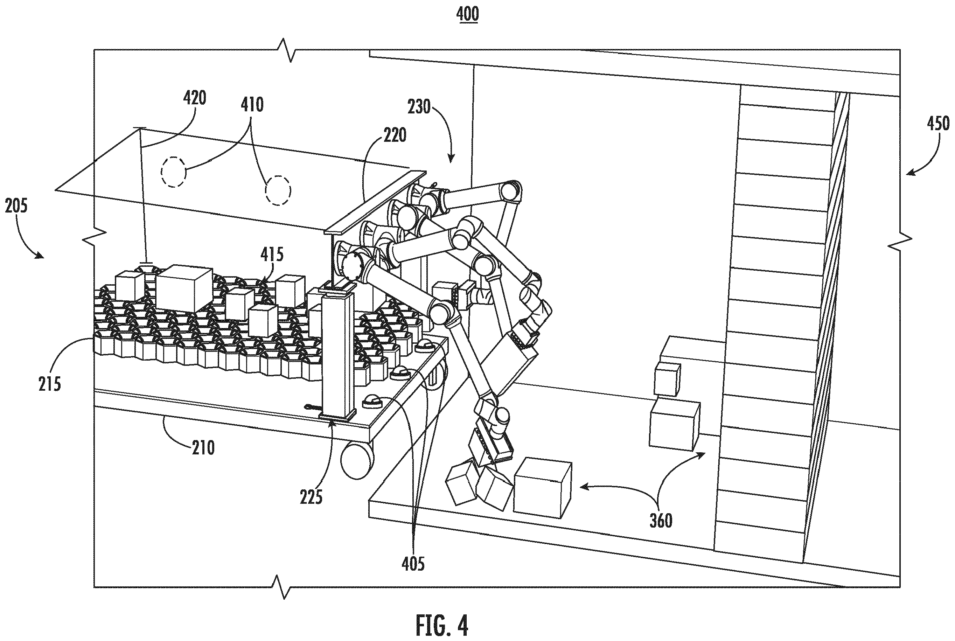

FIG. 4 illustrates an exemplary front perspective view 400 of the robotic unloader 205 in a logistics container 450 in accordance with various embodiments of the present disclosure. As described herein, the robotic system 205 can include a conveyor system 215 and a plurality of robotic manipulators 230. The robotic system 205 can be configured to move items 360 from the logistics container 450 to a conveyor surface 415 of the conveyor system 215.

As described herein, plurality of robotic manipulators 230 can be positioned above the conveyor surface 415 to allow for vertical movement of the plurality of robotic manipulators 230. For instance, the plurality of robotic manipulators 230 can be mounted to the vertical mount 220. The vertical mount 220 can be disposed a threshold distance above the conveyor surface 415. In some embodiments, the vertical mount 220 can be movable between a plurality of vertical positions. At each respective vertical position, the vertical mount 220 can be a respective distance from the movable base 210.

A vertical position for the vertical mount 220 can be based on a container height of the logistics container 450 and/or an item height of one or more items 360 (e.g., an item wall, etc.) disposed within the logistics container 450. For example, in some embodiments, the vertical mount 220 can be placed at a vertical position that is medial to the height of the logistics container 450 and/or the one or more items 360 (e.g., an item wall, etc.) disposed within the logistics container 450.

To improve throughput, the vertical position for the vertical mount 220 (and/or the conveyor system 215) can be changed to decrease a distance between the plurality of robotic manipulators 230 and the items 360. In some embodiments, the vertical position of the vertical mount 220 (and/or the conveyor system 215) can be changed during an unloading and/or loading task. For instance, the one or more vertical actuation devices 225 can be operable to adjust the vertical position of the vertical mount 220 responsive to: (i) a movement of the one or more items within the logistics container and/or (ii) an item layout within the logistics container. In addition, or alternatively, the one or more vertical actuation devices 225 (and/or a separate set of vertical conveyor actuation devices) can be operable to adjust the vertical position of the conveyor system 215 responsive to: (i) a movement of the one or more items within the logistics container and/or (ii) an item layout within the logistics container. The vertical positions of the vertical mount 220 and the conveyor system 215 can be moved together and/or independently to improve throughput achieved by the robotic system 205.

By way of example, the vertical mount 220 (and/or the conveyor system 215) can be repositioned to minimize a distance between the plurality of robotic manipulators 230 and one or more items that are queued for handling. The queued items, for example, can include a subset of the items 360 that are assigned for an upcoming handling iteration. The vertical mount 220 can be dynamically repositioned (e.g., by extending and/or retracting the vertical actuation devices 225, etc.) after one or more items are handled to continuously minimize the distance between the plurality of robotic manipulators 230 and newly queued items.

The robotic system 205 can identify items for handling (e.g., queued items) using sensor data indicative of the environment of the robotic system 205 such as, for example, an interior of the logistics container 450. For instance, as described herein, the robotic system 205 can include a robotic manipulator vision system. The robotic manipulator vision system can include one or more manipulator sensors 405 operable to generate sensor data indicative of the surrounding environment of the robotic system 205. The manipulator sensors 405 can include one or more cameras (e.g., RGB cameras), one or more depth sensors (e.g., LiDAR sensors, etc.), and/or any other sensor capable of recording attributes of an environment. The environment can include an area toward the front section of the robotic system. For instance, the robotic system 205 can face the interior of the logistics container 450. The sensor data can include container data indicative of an interior of the logistics container 450.

The robotic manipulator vision system can be configured to capture container data for each segment (e.g., the handling zones of FIG. 3) of the interior of the logistics container 450. The robotic manipulator vision system can include one or multiple manipulator sensors to capture each segment from one or a plurality of different viewing angles. In some embodiments, a number, and a placement of the plurality of manipulator sensors (e.g., cameras, etc.) can be based on a number and/or placement of the plurality of robotic manipulators 230. By way of example, the plurality of manipulator sensors can be positioned with respect to each of the plurality of robotic manipulators 230 to provide a continuous feed of container data for each segment of the logistics container 450 that accounts for the independent motion of each of the plurality of robotic manipulators 230.

The robotic system 205 can include a controller communicatively coupled to the plurality of robotic manipulators 230 and the robotic manipulator vision system. The controller can be configured to automatically control the plurality of robotic manipulators 230 based on the container data. The controller, for example, can include one or more processors and/or memory devices. The memory devices can include computer-readable instructions for interpreting the container data and initiating a motion for each of the plurality of robotic manipulators 230 based on the container data. The computer-readable instructions, for example, can implement one or more motion planning and/or trajectory generation functions for operating the plurality of robotic manipulators 230.

In some embodiments, the robotic system 205 can include a conveyor vision system. The robotic manipulator vision system can be distinct from the conveyor vision system. For example, the conveyor vision system can include one or more conveyor sensors 410 that are different from the manipulator sensors 405. The conveyor sensors 410 can be operable to generate conveyor data indicative of an arrangement of a plurality of items disposed on a conveyor surface 415 of the conveyor system 215. The conveyor sensors 410 can include one or more cameras (e.g., RGB cameras), one or more depth sensors (e.g., LiDAR sensors, etc.), and/or any other sensor capable of recording attributes of the conveyor system 215.

The conveyor sensors 410 can be disposed at a position relative to the conveyor surface 415. For instance, the conveyor sensors 410 can be disposed above the conveyor surface 415. For example, at least one conveyor sensor (e.g., a camera) can be disposed at the fixed position 420 relative to the conveyor system 215. As one example, the conveyor sensors 410 can include two sensors disposed directly above the conveyor surface 415 at a fixed distance 420. The conveyor sensors 410 can be disposed at a position a fixed distance 420 from the conveyor surface 415, such that the fixed distance 420 is maintained if the conveyor system 215 is moved.

The robotic system 205 can include a controller communicatively coupled to the plurality of conveyor system 215 and the conveyor vision system. The controller can be configured to automatically control the conveyor system 215 based on the conveyor data. By way of example, the controller can control the conveyor system 215 to arrange the plurality of items in a singulated outflow based on the conveyor data. The controller, for example, can include one or more processors and/or memory devices. The memory devices can include computer-readable instructions for interpreting the conveyor data and initiating an actuation of the one or more orientation mechanisms of the conveyor system 215 to rearrange one or more items on the conveyor surface 415. The computer-readable instructions, for example, can implement one or more conveyor actuation functions for operating the conveyor system 215.

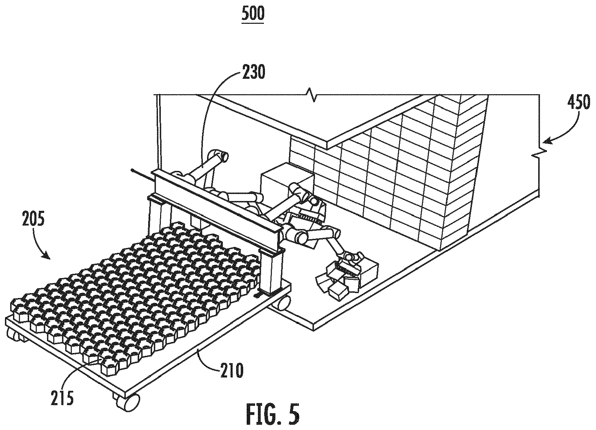

FIG. 5 illustrates an exemplary back perspective view 500 of the robotic system 205 and the logistics container 450 in accordance with various embodiments of the present disclosure. As described herein, the robotic system 205 can include a conveyor system 215 and a plurality of robotic manipulators 230. The robotic system 205 can be configured to move items 360 from the logistics container 450 to a conveyor surface 415 of the conveyor system 215.

The conveyor system 215 and the plurality of robotic manipulators 230 can be disposed and/or coupled to the movable base 210. The movable base 210 can be operable to move the conveyor system 215 and the plurality of robotic manipulators 230 with respect to a logistic facility and/or the logistics container 450. For example, the movable base 210 can be operable to move the conveyor system 215 and the plurality of robotic manipulators 230 within the logistics container 450. By way of example, the movable base 210 can include a width that is less than a width of the logistics container 450 such the robotic system 205 can operate within the logistics container 450.

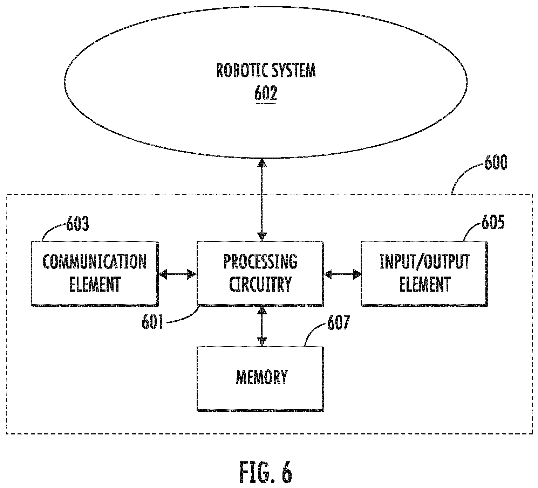

FIG. 6 illustrates an example controller component 600 in electronic communication with various other components of an example robotic system 602 in accordance with various embodiments of the present disclosure. As shown, the controller component 600 comprises processing circuitry 601, a communication element 603, input/output element 605, a memory 605 and/or other components configured to perform various operations, procedures, functions or the like described herein.

In some embodiments, the controller component 600 can be or comprise a printed circuited board (PCB). In some examples, the controller component 600 (e.g., PCB) can further comprise one or more of a full bridge motor driver, a hall sensor, one or more thermal sensors, one or more user interfaces, one or more protection circuits, configuration management circuitry, a wireless interface, sensing element circuitry (e.g., image sensor circuitry), an interface connector, power control circuitry, gate driver circuitry and/or the like.

The processing circuitry 601 can be embodied as means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, but not limited to, an application specific integrated circuit (ASIC) or field programmable gate array (FPGA), or some combination thereof. Accordingly, although illustrated in FIG. 6 as a single processor, in an embodiment, the processing circuitry 601 can include a plurality of processors and signal processing modules. The plurality of processors can be embodied on a single electronic device or can be distributed across a plurality of electronic devices collectively configured to function as the circuitry of the robotic system 602. The plurality of processors can be in operative communication with each other and can be collectively configured to perform one or more functionalities of the circuitry of the robotic system as described herein. In an example embodiment, the processing circuitry 601 can be configured to execute instructions stored in the memory 607 or otherwise accessible to the processing circuitry 601. These instructions, when executed by the processing circuitry 601, can cause the circuitry of the robotic system 602 to perform one or more of the functionalities, as described herein.

Whether configured by hardware, firmware/software methods, or by a combination thereof, the processing circuitry 601 can include an entity capable of performing operations according to embodiments of the present disclosure while configured accordingly. Thus, for example, when the processing circuitry 601 is embodied as an ASIC, FPGA or the like, the processing circuitry 601 can include specifically configured hardware for conducting one or more operations described herein. Additionally, or alternatively, when the processing circuitry 601 is embodied as an executor of instructions, such as can be stored in the memory 607, the instructions can specifically configure the processing circuitry 601 to perform one or more algorithms and operations described herein.

Thus, the processing circuitry 601 used herein can refer to a programmable microprocessor, microcomputer or multiple processor chip or chips that can be configured by software instructions (applications) to perform a variety of functions, including the functions of the various embodiments described above. In some devices, multiple processors can be provided dedicated to wireless communication functions and one processor dedicated to running other applications. Software applications can be stored in the internal memory before they are accessed and loaded into the processors. The processors can include internal memory sufficient to store the application software instructions. In many devices, the internal memory can be a volatile or nonvolatile memory, such as flash memory, or a combination thereof. The memory can also be located internal to another computing resource (e.g., enabling computer readable instructions to be downloaded over the Internet or another wired or wireless connection).

The memory 607 can include suitable logic, circuitry, and/or interfaces that are adapted to store a set of instructions that is executable by the processing circuitry 601 to perform predetermined operations. Additionally, or alternately, the memory 607 can be configured to store data/information, application programs, instructions, etc., so that the controller component 600 can execute various functions according to the embodiments of the present disclosure. For example, in at least some embodiments, the memory 607 is configured to cache input data for processing by the processing circuitry 601. Thus, in at least some embodiments, the memory 607 is configured to store program instructions for execution by the processing circuitry 601. The memory 607 can store information in the form of static and/or dynamic information. When the functions are executed, the stored information can be stored and/or used by the controller component 600. Example memory embodiments can include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory 607 can be integrated with the processing circuitry 601 on a single chip, without departing from the scope of the disclosure.

The communication element 603 can be implemented as any apparatus included in a circuit, hardware, a computer program product, or a combination thereof, which is configured to receive and/or transmit data from/to another component or apparatus. The computer program product comprises computer-readable program instructions stored on a computer-readable medium (for example, the memory 607) and executed by a processing component 600 (for example, the processing circuitry 601). In some embodiments, the communication element 603 (as with other components discussed herein) can be at least partially implemented as the processing circuitry 601 or otherwise controlled by the processing circuitry 601. In this regard, the communication element 603 can communicate with the processing circuitry 601, for example, through a bus. The communication element 603 can comprise, for example, antennas, transmitters, receivers, transceivers, network interface cards and/or supporting hardware and/or firmware/software and is used for establishing communication with another apparatus. The communication element 603 can be configured to receive and/or transmit any data that can be stored by the memory 607 by using any protocol that can be used for communication between apparatuses. The communication element 603 can additionally or alternatively communicate with the memory 607, the input/output element 605 and/or any other component of the processing component 600, for example, through a bus.

In some embodiments, the processing component 600 can comprise an input/output element 605. The input/output element 605 can communicate with the processing circuitry 601 to receive instructions input by the user and/or to provide audible, visual, mechanical, or other outputs to the user. Therefore, the input/output element 605 can comprise supporting devices, such as a keyboard, a mouse, a display, a touch screen display, and/or other input/output mechanisms. Alternatively, at least some aspects of the input/output element 605 can be implemented on a device used by the user to communicate with the processing component 600. The input/output element 605 can communicate with the memory 607, the communication element 603 and/or any other component, for example, through a bus. One or a plurality of input/output modules and/or other components can be included in the processing component 600.

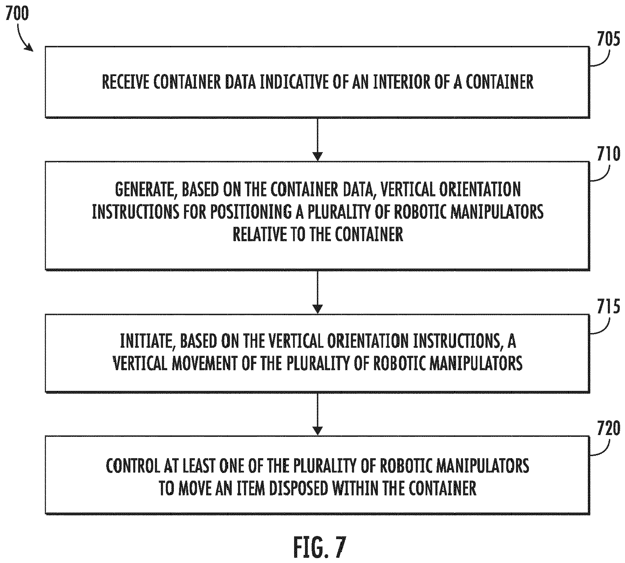

FIG. 7 is a flowchart diagram illustrating example operations 700 in accordance with various embodiments of the present disclosure. In some examples, the example operations 700 can be performed by various system components of the robotic system described herein. In some examples, the system components can include processing circuitry that can be electrically coupled to and/or in electronic communication with other circuitries, such as, but not limited to the robotic system 205 described above in connection with FIGS. 1-6.

The example operations 700 can include an operation 705. At operation 705, the operations can include receiving container data indicative of an interior of a logistics container. For instance, a computing system (e.g., the robotic system 205 and/or processing circuitry thereof) can receive the container data indicative of the interior of the logistics container from a robotic manipulator vision system. The container data can include sensor data recorded by one or more front sensors of the robotic system.

The example operations 700 can include an operation 710. At operation 710, the operations can include generating, based on the container data, vertical orientation instructions for positioning a plurality of robotic manipulators relative to the container. For instance, the computing system can generate, based on the container data, the vertical orientation instructions for positioning the plurality of robotic manipulators relative to the container. The vertical orientation instructions can initiate a movement of one or more vertical actuator devices of the robotic system. In this manner, the computing system can initiate a change in the vertical position of a vertical mount of the robot system to reposition the plurality of robotic manipulators relative to the container.

The example operations 700 can include an operation 715. At operation 715, the operations can include initiating, based on the vertical orientation instructions, a vertical movement of the plurality of robotic manipulators. For instance, the computing system can initiate, based on the vertical orientation instructions, the vertical movement of the plurality of robotic manipulators by executing the vertical orientation instructions and/or providing one or more actuation commands to the vertical actuation devices based on the vertical orientation instructions.

The example operations 700 can include an operation 720. At operation 720, the operations can include controlling at least one of the plurality of robotic manipulators to move an item disposed within the container. For instance, the computing system can control at least one of the plurality of robotic manipulators to move an item disposed within the container. To so, the computing system can identify the one or more items disposed within the container. The computing system can divide the container into multiple handling zones and assign a respective robotic manipulator to a respective handling zone. The computing system can independently control each of the robotic manipulators to move a respective item in a corresponding handling zone.

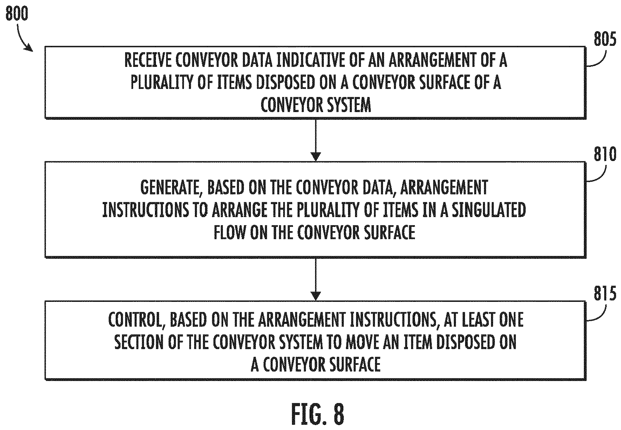

FIG. 8 is a flowchart diagram illustrating example operations 800 in accordance with various embodiments of the present disclosure. In some examples, the example operations 800 can be performed by various system components of the robotic system described herein. In some examples, the system components can include processing circuitry that can be electrically coupled to and/or in electronic communication with other circuitries, such as, but not limited to the robotic system 205 described above in connection with FIGS. 1-6.

In some embodiments, the example operations 800 can include one or more operations subsequent to operation 720 of FIG. 7 in which at least one of the plurality of robotic manipulators are controlled to move an item disposed within the container.

The example operations 800 can include an operation 805. At 805, the operations can include receiving conveyor data indicative of an arrangement of a plurality of items disposed on a conveyor surface of a conveyor system. For instance, the computing system can receive conveyor data indicative of the arrangement of the plurality of items disposed on the conveyor surface of the conveyor system. The plurality of robotic manipulators and the conveyor system can be disposed on a shared moveable base.

The example operations 800 can include an operation 810. At 810, the operations can include generating, based on the conveyor data, arrangement instructions to arrange the plurality of items in a singulated flow on the conveyor surface. For instance, the computing system can generate, based on the conveyor data, arrangement instructions to arrange the plurality of items in the singulated outflow on the conveyor surface.

The example operations 800 can include an operation 815. At 815, the operations can include controlling, based on the arrangement instructions, at least one section of the conveyor system to move an item disposed on a conveyor surface. For instance, the computing system can control, based on the arrangement instructions, at least one section of the conveyor system to move an item disposed on a conveyor surface.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

## Claims

1. A robotic system comprising:
a moveable base;
a conveyor system disposed on the movable base;
a vertical mount coupled to the movable base by one or more vertical actuation devices; and
a plurality of robotic manipulators, each having a first end mounted to the vertical mount and a second end having an end effector.

2. The robotic system of claim 1, wherein conveyor system comprises a conveyor surface, wherein the vertical mount is disposed a threshold distance above the conveyor surface.

3. The robotic system of claim 2, wherein a robotic manipulator of the plurality of robotic manipulators comprises a six degrees of freedom robotic arm configured to move in a vertical plane.

4. The robotic system of claim 3, wherein the robotic manipulator is configured to transfer an item from a container to a corresponding section of the conveyor surface located below the robotic manipulator.

5. The robotic system of any of claims 2 through 4, wherein the vertical mount is movable between a plurality of vertical positions, wherein each respective vertical position is a respective distance from the moveable base.

6. The robotic system of claim 5, wherein the conveyor system is movable in a vertical direction such that the vertical mount is disposed the threshold distance above the conveyor surface at each of the plurality of vertical positions.

7. The robotic system of claim 5, wherein a vertical position for the vertical mount is based on a container height of a container or an item height of one or more items disposed within the container.

8. The robotic system of claim 7, wherein the one or more vertical actuation devices are operable to adjust the vertical position of the vertical mount responsive to: (i) a movement of the one or more items within the container or (ii) an item layout within the container.

9. The robotic system of claim 7, wherein the vertical position is medial to the height of the container.

10. The robotic system of any of claims 1 through 4, wherein the end effector comprises a vacuum effector.

11. The robotic system of any of claims 1 through 4, wherein the conveyor system comprises one or more orientation mechanisms operable to adjust a position of an item placed on a conveyor surface of the conveyor system.

12. The robotic system of claim 11, wherein the one or more orientation mechanisms comprise one or more side actuators configured to apply a force to the item placed on the conveyor surface to position the item in a center section of the conveyor surface.

13. The robotic system of any of claims 1 through 4, further comprising:
a conveyor vision system, the conveyor vision system comprising at least one conveyor camera operable to generate conveyor data indicative of an arrangement of a plurality of items disposed on a conveyor surface of the conveyor system.

14. The robotic system of claim 13, wherein the at least one conveyor camera is disposed at a fixed position relative to the conveyor system.

15. A method comprising:
receiving container data indicative of an interior of a container;
generating, based on the container data, vertical orientation instructions for positioning a plurality of robotic manipulators relative to the container;
initiating, based on the vertical orientation instructions, a vertical movement of the plurality of robotic manipulators; and
controlling at least one of the plurality of robotic manipulators to move an item disposed within the container.
